# EUROPEAN PATENT APPLICATION

(11) **EP 1 688 346 A2**
(43) Date of publication of application: **09.08.2006**
(21) Application number: 06002470.0
(22) Date of filing: 07.02.2006
(51) Int. Cl.: B62M 9/12

(54) **Bicycle derailleur with a motion limiting structure**

(30) Priority: 07.02.2005 JP 2005030438
(71) Applicant: SHIMANO INC., Osaka 590-8577 (JP)
(72) Inventor: Shahana, Satoshi, Osaka 590-8577 (JP)
(74) Representative: GROSSE BOCKHORNI SCHUMACHER

(57) **Abstract**

A bicycle derailleur comprises a base member 32; a movable member 42 supporting a chain guide 40; a linking member 80 coupled between the base member 32 and the movable member 42 so that the chain guide 40 moves laterally relative to the base member 32; a biasing member coupler supported to the base member 32; and a biasing member coupled between the base member 32 and the biasing member coupler so that the base member 32 is biased in a first rotational direction relative to the biasing member coupler. A motion limiting member is supported relative to the base member 32 to limit rotation of the base member 32 in a second rotational direction opposite the first rotational direction.

## Description

### BACKGROUND OF THE INVENTION

The present invention is directed to bicycles and, more particularly, to a bicycle derailleur with a motion limiting structure.

A bicycle rear derailleur is used to selectively engage a chain with one of a plurality of sprockets that rotate with the rear wheel of the bicycle. A typical rear derailleur comprises a base member, a movable member supporting a chain guide, and a linking member coupled between the base member and the movable member so that the chain guide moves laterally relative to the base member. The base member usually is mounted to the rear end of the bicycle frame by a mounting bolt that screws into a threaded opening formed in the rear of the bicycle frame. The derailleur may include a stopper plate rotatably mounted to the mounting bolt, wherein a first stopper member contacts an abutment formed on the frame end to limit counterclockwise rotation of the base member relative to the frame (when viewed from the outer side of the derailleur). Such a derailleur is disclosed in Japanese Laid Open Patent Publication No. 2004-148983.

Some derailleurs are further spring biased in a clockwise direction relative to the stopper plate. In this case, one end of a torsion spring is attached to the base member, and another end of the torsion spring is attached to the stopper plate. The stopper plate includes a second stopper member that contacts an abutment formed on the base member to limit clockwise rotation of the base member relative to the stopper plate caused by the torsion spring. Some derailleurs further include an adjusting bolt that screws into the first stopper member to contact the abutment formed on the frame end. Turning the adjusting bolt adjusts the rotational position of the stopper plate relative to the frame end and thereby adjusts the tension of the torsion spring for a given rotational position of the base member.

During bicycle assembly, one end of an operating cable is connected to an actuating arm that is typically mounted to the linking member, and another end of the operating cable is connected to a shift control device mounted on the bicycle handlebar. When the rider operates the shift control device, the operating cable is pulled or released accordingly. The operating cable pulls or releases the actuating arm, which causes the linking member to pivot relative to the base member and move the chain guide laterally to shift the bicycle chain from one rear sprocket to another rear sprocket.

Since the torsion spring biases the base member in the clockwise direction, rotation in the counterclockwise direction is inhibited even when riding over rough terrain that subjects the bicycle to severe bouncing motion. As a result, the chain guide and the movable member are less prone to striking the frame, thereby minimizing the risk of damage to the chain guide and to the bicycle frame. However, since the rotational position of the stopper plate relative to the frame also sets the initial rotational position of the base member relative to the frame, adjusting the rotational position of the stopper plate to set the desired biasing force of the torsion spring may alter the initial position of the base member to an undesirable position. For example, the altered position may increase the risk of the chain guide striking the frame during rough riding.

### SUMMARY OF THE INVENTION

The present invention is directed to various features of a bicycle derailleur. In one embodiment, a bicycle derailleur comprises a base member; a movable member supporting a chain guide; a linking member coupled between the base member and the movable member so that the chain guide moves laterally relative to the base member; a biasing member coupler supported to the base member; and a biasing member coupled between the base member and the biasing member coupler so that the base member is biased in a first rotational direction relative to the biasing member coupler. A motion limiting member is supported relative to the base member to limit rotation of the base member in a second rotational direction opposite the first rotational direction. Additional inventive features will become apparent from the description below, and such features alone or in combination with the above features may form the basis of further inventions as recited in the claims and their equivalents.

### BRIEF DESCRIPTION OF THE DRAWINGS

Fig. 1 is a side view of a particular embodiment of a bicycle;
Fig. 2 is a detailed side view of a particular embodiment of a rear derailleur;

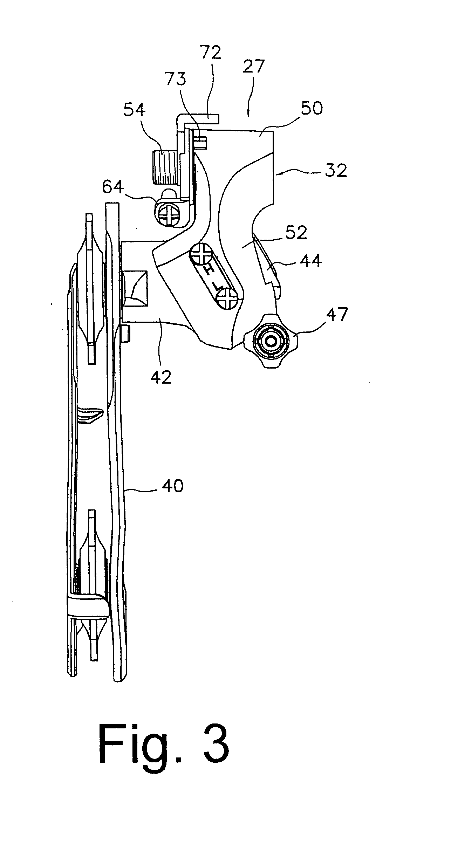

Fig. 3 is a rear view of the derailleur;
Fig. 4 is a partial cross sectional view of the base member mounted to the bicycle frame;
Fig. 5 is an exploded view of a particular embodiment of components associated with the base member;
Fig. 6 is a detailed perspective view of particular embodiments of a spring coupling unit and motion limiting unit; and
Fig. 7 is a view illustrating the interaction between the spring coupling unit, the motion limiting unit, the base member and the bicycle frame.

### DETAILED DESCRIPTION OF THE EMBODIMENTS

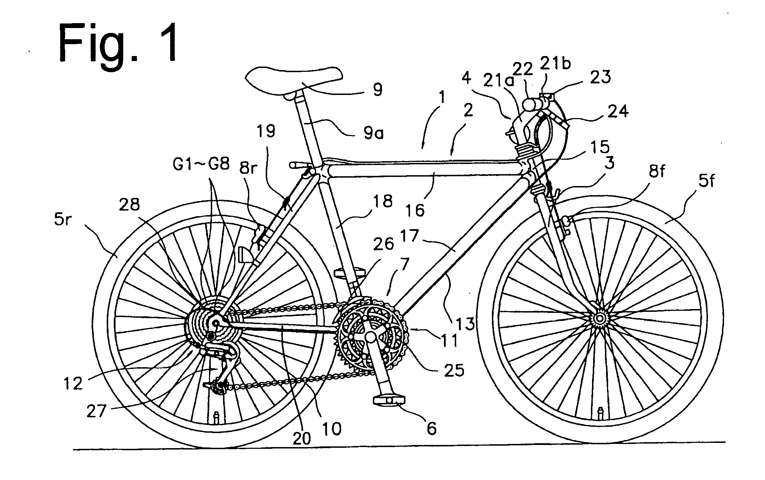

Fig. 1 is a side view of a particular embodiment of a bicycle 1. Bicycle 1 includes a diamond-shaped frame body 2, a front fork 3, a handlebar unit 4, a front wheel 5f, a rear wheel 5r, a drive unit 7 for transferring rotation of pedals 6 to rear wheel 5r, a front brake unit 8f and a rear brake unit 8r.

Frame body 2 comprises front and rear triangular portions, wherein front triangular portion comprises a head tube 15, a top tube 16, a down tube 17, and a seat tube 18. Fork 3 is mounted to head tube 15 for rotation around an inclined axis. Handlebar unit 4 is mounted to the upper portion of fork 3, and front wheel 5f is rotatably mounted to the lower portion of fork 3. Handlebar unit 4 comprises a handle stem 21 a and a handlebar 21 b mounted to the top of handlebar stem 21 a, wherein handle stem 21a is mounted to the top of front fork 3. Handlebar 21b is equipped with a pair of left and right grips 22, a pair of left and right shift control units 23, and a pair of left and right brake controllers 24. A vertically adjustable seat post 9a with a saddle 9 mounted thereon is mounted in the upper portion of seat tube 18, and a forward portion of drive unit 7 is rotatably mounted at the lower portion of seat tube 18.

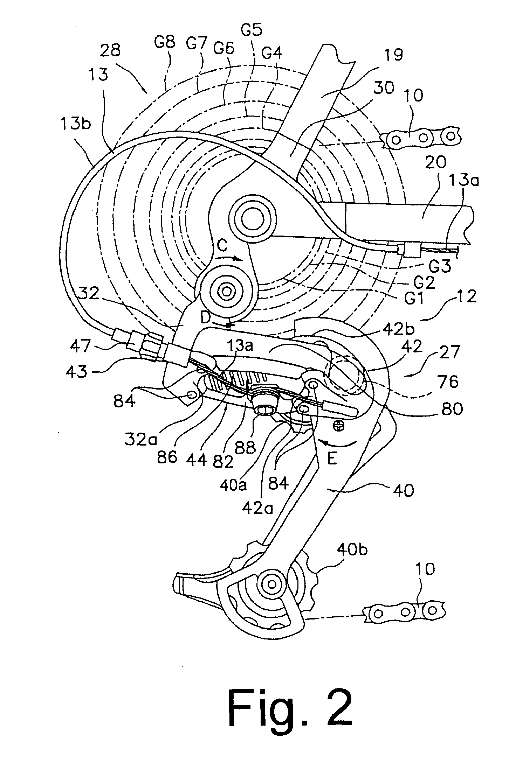

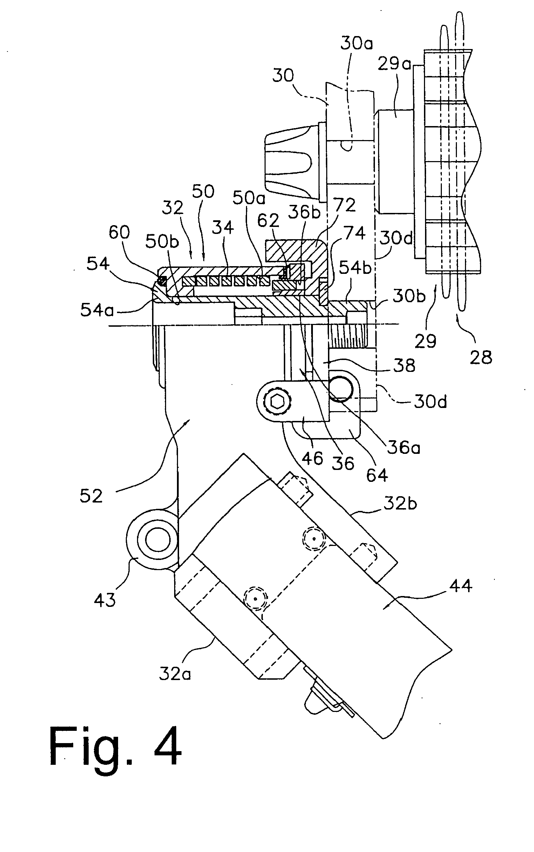

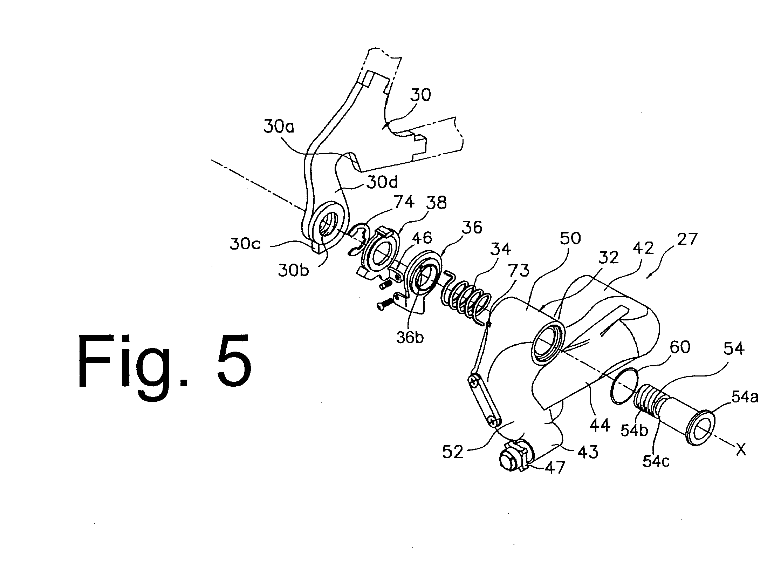

The rear triangular portion of frame body 2 comprises seat tube 18, a pair of seatstays 19 and a pair of chainstays 20. The back ends of seatstays 19 and chainstays 20 are connected by rear frame ends 30 (Fig. 2), and rear wheel 5r is mounted to these frame ends 30. As shown in Fig. 5, the right side frame end 30 includes a mounting slot 30a, a screw hole 30b, and a positioning abutment 30c. Mounting slot 30a typically is formed sloping diagonally upward from the bottom of frame end 30, and screw hole 30b typically is formed at the end portion of a protruding part 30d that projects diagonally downward from the back of frame end 30. Mounting slot 30a is used for installing the hub axle 29a (Fig. 4) of a rear hub 29 of rear wheel 5r, and screw hole 30b is used for mounting a rear derailleur 27. Positioning abutment 30c is formed at the tip of protruding part 30d, and it is used to set a counterclockwise rotational position of derailleur 27 in a manner described below. In order to prevent damage or deformation to other components of frame body 2, frame ends 30 may be less rigid than other components and may be designed to be replaceable if damaged.

Drive portion 7 has a chain 10 and front and rear external gearshift devices 11 and 12. Front external gearshift device 11 is disposed at a bottom bracket portion of seat tube 18, and it includes a gear crank 25 and a front derailleur 26. Gear crank 25 may have a plurality of (e.g., three) sprockets with different numbers of teeth. Front derailleur 26 is operatively coupled to one of the shift control devices 23 through a shift cable assembly in the form of a Bowden cable (not shown), and front derailleur 26 engages the chain 10 with one of the three sprockets disposed on gear crank 5 in response to the operation of that shift control device 23.

As shown in Figs. 1 and 2, rear external gearshift device 12 has rear derailleur 27 and a gear cluster 28 comprising a plurality of (e.g., eight) sprockets G1-G8 with different numbers of teeth mounted on the rear hub 29. Rear derailleur 27 is operatively coupled to one of the shift control devices 23 through a shift cable assembly in the form of a Bowden cable assembly 13, and rear derailleur 27 engages the chain 10 with one of the sprockets G1-G8 in response to the operation of that shift control device 23.

As shown in Fig. 2, rear derailleur 27 is detachably mounted to the right side frame end 30. Rear derailleur 27 comprises a base member 32, a chain guide 40, a movable member 42, and a link mechanism 44 coupled between base member 32 and movable member 42 so that chain guide 40 moves laterally relative to base member 32. Chain guide 40 guides the chain 10 to any one of the sprockets G1 to G8.

Chain guide 40 rotatably supports an upper guide pulley 40a and a lower tension pulley 40b, wherein chain 10 is threaded between guide pulley 40a and tension pulley 40b as shown. Chain guide 40 is mounted to movable member 42 so that chain guide rotates around an axis that is substantially parallel to hub axle 29a of rear hub 29. A torsion coil spring 76 is mounted between movable member 42 and chain guide 40 so that chain guide 40 is biased clockwise (in the direction of arrow E) when viewed from the outside to provide tension to chain 10.

Link mechanism 44 comprises linking members such as a first link member 80 and a second link member 82, wherein first ends of link members 80 and 82 are mounted to link support devices 32a and 32b (Fig. 4) on base member 32 through pivot shafts 84, and second ends of link members 80 and 82 are mounted to link support devices 42a and 42b on movable member 42 through pivot shafts 84. A coil spring 86 is connected to diagonally opposite pivot shafts 84 so that link members 80 and 82 are biased to move chain guide 40 toward rear sprocket G8. Second link member 82 includes a cable attachment unit 88 for attaching an inner cable 13a of Bowden cable assembly 13.

As shown in Figs. 4 and 5, base member 32 includes a cylindrical boss part 50, an arm part 52 extending radially from boss part 50, and link support devices 32a and 32b disposed at an end section of arm part 52 such that link support device 32a is disposed further from frame end 30 than link support device 32b. Boss part 50 includes a through hole 50a dimensioned for receiving a mounting axle 54 therethrough. Mounting axle 54 includes a collar 54a and a shaft with an externally threaded portion 54b and an annular groove 54c. Externally threaded portion 54b screws into threaded opening 30b in frame end 30 so that base member 32 is mounted to frame end 30 through mounting axle 54 for rotation around a rotational axis X that is substantially parallel with hub axle 29a. An O-ring 60 is mounted between collar 54a and boss part 50 to prevent a liquid from entering into through hole 50a.

An outer casing coupling member 43 with a threaded inner peripheral surface is disposed at the lower end of arm portion 52 for coupling an outer casing 13b of Bowden cable assembly 13 to base member 32. An outer casing adjusting unit 47 is screwed into outer casing coupling member 43 to adjust the axial position of outer casing 13b in a known manner.

One end of a biasing member in the form a coiled torsion spring 34 is fixed to base member 32, and the other end of torsion spring 34 is fixed to a biasing member coupler in the form of a spring coupling opening 36b formed in a spring coupling unit 36. Spring 34 is rotatably supported around mounting axle 54 in a slightly compressed and twisted state so that base member 32 is biased clockwise (in the direction of arrow C in FIG. 2) relative to spring coupling unit 36 when viewed from the outside. As shown in Fig. 4, spring 34 is fitted within through hole 50a such that one side abuts against a smaller diameter portion 50b of through hole 50a.

A motion limiting unit 38 also is rotatably supported around mounting axle 54. A retaining ring 74 fits within annular groove 54c formed in mounting axle 54 to retain mounting axle 54, spring 34, spring coupling unit 36 and motion limiting unit 38 to base member 32.

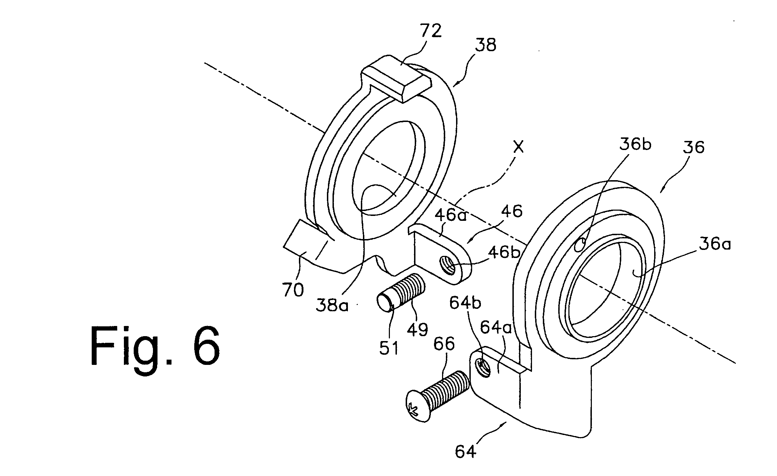

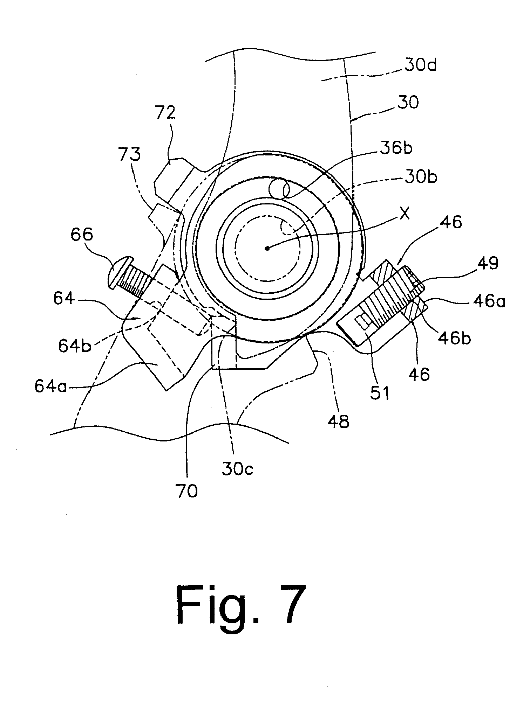

As shown in Figs. 5 and 6, motion limiting unit 38 comprises an annular member that forms a through hole 38a dimensioned to receive mounting axle 54 therethrough. Motion limiting unit 38 may be formed, for example, by pressing a steel sheet. In this embodiment, motion limiting unit 38 is disposed between spring coupling unit 36 and retaining ring 74 so as to be adjacent to frame end 30. A frame contacting member 70 extends in a direction substantially parallel to rotational axis X toward frame end 30 so as to engage positioning abutment 30c in frame end 30, and a position limiting member 72 extends in a direction substantially parallel to rotational axis X away from frame end 30 so as to engage a positioning abutment 73 (Fig. 7) formed on boss 50 of base member 32. Frame contacting member 70 prevents counterclockwise rotation of motion limiting unit 38 (in the direction of arrow D in Fig. 2) relative to frame end 30. Since base member 32 is biased clockwise by spring 34, contact between position limiting member 72 and abutment 73 prevents unlimited clockwise rotation of base member 32 relative to motion limiting unit 38.

A portion of motion limiting unit 38 extends radially outward and then bends to form a motion limiting member in the form of a tab 46a that extends in a direction substantially parallel to rotational axis X away from frame end 30 and toward boss part 50 of base member 32. Another motion limiting member in the form of a limit position adjusting member having the shape of an adjusting screw 49 screws into a threaded opening 46b formed in tab 46a. Another motion limiting member in the form of an elastic shock absorbing member 51 formed of rubber or some other suitable shock absorbing material to prevent noise and wear on adjusting screw 49 is fitted to the tip of adjusting screw 49 and forms an abutment that engages an abutment 48 (Fig. 7) formed on base member 32 radially outwardly from mounting axle 54 at a boundary of boss part 50 and arm part 52. In this embodiment, shock absorbing member 51 is formed integrally with adjusting screw 49 by insert molding so that shock absorbing member 51 may be mounted detachably on adjusting screw 49 so as to be replaceable. Of course, in some embodiments, shock absorbing member 51 and/or adjusting screw 49 may be omitted.

Motion limiting members 46, 49 and/or 51 regulate the range of motion of base member 32 in the counterclockwise direction to prevent chain guide 40 and movable member 42 from contacting chain stay 20 when base member 32 rotates counterclockwise under severe riding conditions. In this embodiment, the rider simply turns adjusting screw 49 so that shock absorbing member 51 contacts abutment 48 on base member 32 to maintain a proper rotational relationship between base member 32 and motion limiting unit 38.

As shown in Fig. 6, spring coupling unit 36 comprises a collared annular member that forms a through hole 36a dimensioned to receive mounting axle 54 therethrough. Spring coupling opening 36b is formed in a side surface of this annular member. Spring coupling unit 36 is disposed adjacent to boss part 50, and a seal member 62 (Fig. 4) is disposed between spring coupling unit 36 and boss part 50 to prevent a liquid from entering into through hole 50a in boss part 50. A spring positioning unit 64 is supported to the annular portion of spring coupling unit 36, and it includes a tab 64a that extends in a direction substantially parallel to rotational axis X toward frame end 30. Tab 64a prevents spring coupling unit 36 from rotating in the counterclockwise direction. A biasing force adjusting member in the form of an adjusting bolt 66 screws into a threaded opening 64b formed in tab 64a. The tip of adjusting bolt 66 is structured to contact frame contacting member 70 on motion limiting unit 38 which, in turn, contacts positioning abutment 30c on frame end 30. Thus, rotation of adjusting bolt 66 changes the rotational phase of spring positioning unit 36, thereby further coiling or uncoiling spring 34 to change the biasing force applied to base member 32. For example, screwing adjusting bolt 66 into threaded opening 64b increases the biasing force applied to base member 32. This is done without changing the relative rotational positions between base member 32, motion limiting unit 38 and frame end 30.

During operation of the bicycle, the rider selects a desired gear ratio using shift operating devices 23 based on the current riding conditions. The various shifting operations are transmitted to front derailleur 26 and rear derailleur 27 accordingly. For example, when the rider operates the shift operating device 23 associated with rear derailleur 27, the inner cable 13a of Bowden cable assembly 13 is advanced or retreated with respect to outer casing 13b, and this cable movement is communicated to second link member 82 via cable attachment unit 88. The cable movement in combination with the biasing force of spring 86 cause the first and second link members 80 and 82 to pivot around their respective pivot shafts 84, thereby moving movable member 42 laterally. Base member 32 and chain guide 40 pivot around their respective pivot shafts in accordance with the biasing forces applied by springs 34 and 76, respectively, to smoothly switch chain 10 to the desired rear sprocket G1-G8.

Since motion limiting unit 38 limits the range of movement of base member 32 in the counterclockwise direction, the risk of chain guide 40 and movable member 42 contacting chain stay 20 is minimized or eliminated even during severely agitated riding conditions, thereby preventing damage to derailleur 27. Furthermore, since spring positioning unit 64 and adjusting bolt 66 on spring coupling unit 36 is provided separately from motion limiting unit 38, the biasing force of spring 34 and the counterclockwise range of motion of base member 32 can be adjusted individually. In other words, the biasing force of spring 34 can be adjusted with little or no impact on the relative position between base member 32 and motion limiting unit 38, and vice versa.

While the above is a description of various embodiments of inventive features, further modifications may be employed without departing from the spirit and scope of the present invention. For example, while shock absorbing member 51 is provided on the adjusting screw 49 in the described embodiment, shock absorbing member 51 may be provided on abutment 48 on base member 32. Similarly, while adjusting screw 49 is supported on tab 46 in the described embodiment, adjusting screw 49 may be supported by abutment 48 on base member 32. Alternatively, adjusting screw 49 may be omitted.

While spring coupling unit 36 and motion limiting unit 38 were arranged adjacent to each other in the described embodiment, many other configurations are possible. For example, base member 32 may be disposed between spring coupling unit 36 and motion limiting unit 38. In such a case, motion limiting unit 38 may be restrained with respect to mounting axle 54.

While rear derailleur 27 was operated manually by operated by Bowden cable assembly 13 in the described embodiment, the teachings herein can be applied to a rear derailleur operated by an electric motor, a hydraulic actuator, a pneumatic actuator, and so on. The size, shape, location or orientation of the various components may be changed as desired. Components that are shown directly connected or contacting each other may have intermediate structures disposed between them. The functions of one element may be performed by two, and vice versa. The function of one element may be performed by another, and functions may be interchanged among the elements. The structures and functions of one embodiment may be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the scope of the invention should not be limited by the specific structures disclosed or the apparent initial focus or emphasis on a particular structure or feature.

## Claims

1. A bicycle derailleur (26, 27) comprising:
a base member (32);
a movable member (42) supporting a chain guide (40);
a linking member (80, 82) coupled between the base member (32) and the movable member (42) so that the chain guide (40) moves laterally relative to the base member (32);
a biasing member coupler (36b) supported to the base member (32);
a biasing member (34) coupled between the base member (32) and the biasing member coupler (36b) so that the base member (32) is biased in a first rotational direction relative to the biasing member coupler (36b); and
a motion limiting member supported relative to the base member (32) to limit rotation of the base member (32) in a second rotational direction opposite the first rotational direction.

2. The derailleur (26, 27) according to claim 1 further comprising a position limiting member (72) that limits a rotational position of the base member (32) in the first rotational direction.

3. The derailleur (26, 27) according to claim 1 or 2 wherein the position limiting member (72) is coupled to the motion limiting member.

4. The derailleur (26, 27) according to any of the preceding claims further comprising a biasing force adjusting member (66) structured to adjust a biasing force of the biasing member (34).

5. The derailleur (26, 27) according to claim 4 wherein the biasing force adjusting member (66) is coupled to the biasing member coupler (36b).

6. The derailleur (26, 27) according to claim 4 or 5 wherein the biasing force adjusting member (66) continuously adjusts the biasing force of the biasing member (34).

7. The derailleur (26, 27) according to claims 4 to 6 wherein the base member (32) includes a through hole (50a) dimensioned to receive a mounting axle (54) therethrough so that the base member (32) rotates around a rotational axis (X), and wherein the biasing member coupler (36b) comprises an annular member dimensioned to receive the mounting axle (54) there-through.

8. The derailleur (26, 27) according to claims 4 to 7 wherein the biasing force adjusting member (66) is supported by a portion of the annular member that extends in a direction of the rotational axis (X).

9. The derailleur (26, 27) according to any of the preceding claims wherein the base member (32) includes a through hole (50a) dimensioned to receive a mounting axle (54) therethrough so that the base member (32) rotates around a rotational axis (X), and wherein the motion limiting member is supported by an annular member dimensioned to receive the mounting axle (54) there-through.

10. The derailleur (26, 27) according to claim 9 wherein the motion limiting member comprises a tab that extends in a direction of the rotational axis (X).

11. The derailleur (26, 27) according to any of the preceding claims wherein the motion limiting member comprises a first abutment that engages a second abutment disposed on the base member (32).

12. The derailleur (26, 27) according to any of the preceding claims wherein the motion limiting member includes a limit position adjusting member (49) structured to adjust a rotation limit position of the base member (32) in the second rotational direction.

13. The derailleur (26, 27) according to claim 12 wherein the limit position adjusting member (49) continuously adjusts the rotation limit position of the base member (32).

14. The derailleur (26, 27) according to claim 12 or 13 wherein the motion limiting member further comprises a shock absorbing member (51) disposed between the first abutment and the second abutment.

15. The derailleur (26, 27) according to claim 14 wherein the shock absorbing member (51) comprises an elastic member.

16. The derailleur (26, 27) according to claims 12 to 15 wherein the motion limiting member extends from the annular member in a direction of the rotational axis (X).

17. The derailleur (26, 27) according to claims 12 to 16 further comprising a position limiting member supported by the annular member and positioned to limit a rotational position of the base member (32) in the first rotational direction.

18. The derailleur (26, 27) according to claim 17 wherein the position limiting member (72) extends in a direction of the rotational axis (X).
